(19) **Europäisches Patentamt / European Patent Office / Office européen des brevets**

(11) **EP 2 965 856 B1**

(12) **EUROPEAN PATENT SPECIFICATION**

(45) Date of publication and mention of the grant of the patent:
**20.06.2018 Bulletin 2018/25**

(21) Application number: **14760074.6**

(22) Date of filing: **20.02.2014**

(51) Int Cl.:
*B23K 35/30* (2006.01)  *B23K 9/00* (2006.01)
*B23K 9/23* (2006.01)  *B23K 35/365* (2006.01)
*C22C 38/22* (2006.01)  *C22C 38/24* (2006.01)
*C22C 38/26* (2006.01)  *C22C 38/32* (2006.01)
*B23K 9/167* (2006.01)  *C22C 38/02* (2006.01)
*C22C 38/04* (2006.01)  *C22C 38/06* (2006.01)
*C22C 38/20* (2006.01)  *C22C 38/28* (2006.01)
*C22C 38/42* (2006.01)  *C22C 38/46* (2006.01)
*C22C 38/48* (2006.01)  *C22C 38/50* (2006.01)
*C22C 38/54* (2006.01)

(86) International application number:
**PCT/JP2014/054084**

(87) International publication number:
**WO 2014/136582 (12.09.2014 Gazette 2014/37)**

(54) **WELDED METAL AND WELDED STRUCTURE**

SCHWEISSMETALL UND GESCHWEISSTE STRUKTUR

MÉTAL SOUDÉ ET STRUCTURE SOUDÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.03.2013 JP 2013045733**

(43) Date of publication of application:
**13.01.2016 Bulletin 2016/02**

(73) Proprietor: **Kabushiki Kaisha Kobe Seiko Sho (Kobe Steel, Ltd.)**
**Kobe-shi, Hyogo 651-8585 (JP)**

(72) Inventors:
• **NAKO Hidenori**
  **Hyogo 651-2271 (JP)**
• **YAMASHITA Ken**
  **Kanagawa 251-8551 (JP)**

• **OTSU Minoru**
  **Kanagawa 251-8551 (JP)**
• **TANIGUCHI Genichi**
  **Kanagawa 251-8551 (JP)**

(74) Representative: **Müller-Boré & Partner Patentanwälte PartG mbB**
**Friedenheimer Brücke 21**
**80639 München (DE)**

(56) References cited:
**EP-A1- 1 693 143    EP-A1- 2 674 241**
**EP-A1- 2 783 790    EP-A1- 2 952 286**
**WO-A1-2012/108517    WO-A1-2013/077356**
**JP-A- H08 150 478    JP-A- 2008 229 718**
**JP-A- 2009 106 949**

EP 2 965 856 B1

## Description

The present invention relates to a weld metal used for welding a high strength steel such as a Cr-Mo steel, and relates more specifically to a weld metal improving the temper embrittlement resistance and SR crack resistance and a welded structure including such weld metal.

[Background Art]

Because a high strength Cr-Mo steel used in a boiler and a chemical reactor vessel and a weld metal section thereof are used under a high temperature and high pressure environment, it is required to be provided with all of the heat resistance (high temperature strength), SR crack resistance (not to cause grain boundary crack in stress relief annealing (SR annealing)), and temper embrittlement resistance (less embrittlement when used under a high temperature environment) at a high level along with the properties such as the strength and toughness. In recent years in particular, in the midst of thickening of a steel plate accompanying the enlargement of apparatuses, in order to prevent drop of the working efficiency, heat input in welding is increasing. In general, because increase of the weld heat input coarsens the microstructure of the weld metal section and deteriorates the toughness (temper embrittlement resistance), required toughness and temper embrittlement resistance have become a higher level.

Technologies focusing on the toughness and temper embrittlement resistance of the weld metal formed in welding a high strength Cr-Mo steel have been proposed variously so far (Patent Literatures 1-5 and the like). For example, in Patent Literature 1, it is disclosed that a weld metal provided with various properties is obtained by stipulating the steel plate composition, welding material composition, and welding condition in detail. According to this technology, in a part of examples, although $vTr_{5.5}$ (temperature at which absorbed energy after SR annealing becomes 5.5 kgf·m) expressing the toughness after stress relief annealing (SR annealing) is as excellent as -50°C, $vTr_{5.5}$ (temperature at which absorbed energy after step cooling becomes 5.5 kgf·m) expressing the toughness after the temper embrittlement treatment (step cooling) is 41°C at the best which cannot be said to be a sufficient level.

In Patent Literature 2, a technology is proposed in which a weld metal excellent in the toughness, strength, temper embrittlement resistance, and SR crack resistance can be achieved by considering the composition of the solid wire and the bond flux and the welding condition (heat input). According to this technology, in a part of examples, although such excellent toughness is obtained that both of $vTr_{55}$ (temperature at which the absorbed energy after SR annealing becomes 55 J) expressing the toughness after SR annealing and $vTr'_{55}$ (temperature at which the absorbed energy after step cooling becomes 55 J) expressing the toughness after the temper embrittlement treatment (step cooling) is below -50°C, $\Delta vTr_{55}(=vTr'_{55}-vTr_{55})$ expressing the degree of embrittlement in tempering is 8°C or more, and it can be hardly said that the temper embrittlement has been sufficiently suppressed.

In Patent Literature 3, it is proposed that a weld metal excellent in the high temperature strength and toughness is achieved by controlling the composition of the wire particularly the concentration of the deoxidizing elements. However, no consideration is paid for the temper embrittlement resistance and SR crack resistance. Also, the weld heat input at the time of property evaluation is approximately 1.8 kJ/mm which is not high.

In Patent Literature 4, it is disclosed that a weld metal excellent in the strength, toughness, temper embrittlement resistance, and SR crack resistance is achieved by restricting the composition of the wire and controlling the form of cementite precipitated in the prior austenite grain boundary at the time of SR annealing. However, the time of SR annealing in evaluating the strength is 26 hours which is comparative short, and the SR annealing temperature is 700°C which is slightly low. Therefore, the strength when SR annealing is performed at higher temperature and by longer time is not assured. Also, $\Delta vTr_{55}(=vTr'_{55}-vTr_{55})$ expressing the degree of embrittlement in tempering is 5°C or more, and it can be hardly said that the temper embrittlement has been sufficiently suppressed.

In Patent Literature 5, in shielded metal arc welding, it is proposed to improve the toughness and strength by controlling the core wire and the coating flux composition of the welding rod. However, no consideration is paid for the temper embrittlement resistance.

On the other hand, in shielded metal arc welding, it is proposed to achieve a weld metal having the toughness and temper embrittlement resistance by controlling the form of oxide and carbide (Patent Literature 6 for example). In this technology, sufficient consideration is not paid for the strength and SR crack resistance.

In Patent Literature 7, it is found out that fine $Mo_2C$ particles precipitated in the temper embrittlement treatment promotes the temper embrittlement, and it is proposed to improve the temper embrittlement resistance by suppressing precipitation of $Mo_2C$. However, in this technology, complicated control of the form of carbide is required for improvement of the temper embrittlement resistance, and industrial load is heavy. EP 1 693 143 A1 also discloses a weld metal of low temperature toughness.

[Citation List]

[Patent Literature]

Patent Literature 1: Japanese Unexamined Patent Application Publication No. Heisei 2-182378
Patent Literature 2: Japanese Unexamined Patent Application Publication No. Heisei 8-150478
Patent Literature 3: Japanese Unexamined Patent Application Publication No. Heisei 8-039287
Patent Literature 4: Japanese Unexamined Patent Application Publication No. Heisei 10-137975
Patent Literature 5: Japanese Unexamined Patent Application Publication No. 2002-263883
Patent Literature 6: Japanese Unexamined Patent Application Publication No. 2008-229718
Patent Literature 7: Japanese Unexamined Patent Application Publication No. 2012-187619

[Summary of Invention]

[Technical Problem]

The present invention has been developed in view of such circumstances as described above, and its object is to provide a weld metal that exerts excellent temper embrittlement resistance and SR crack resistance even in the welding condition with comparatively large heat input and is excellent in properties such as the toughness and strength, and a welded structure including such weld metal.

[Solution to Problem]

The weld metal in relation with the present invention and according to appended claims solves the problem described above.

The present invention also incorporates a welded structure that includes such weld metal as described above.

[Advantageous Effects of Invention]

According to the present invention, because the nuclei formation density of carbide formed in the prior austenite grain boundary is increased by strictly stipulating the chemical composition, a weld metal that exerts excellent temper embrittlement resistance and SR crack resistance and is excellent in properties such as the toughness and strength can be achieved.

[Brief Description of drawings]

[Fig. 1] Fig. 1 is a graph showing a step cooling treatment condition.
[Fig. 2] Fig. 2 is a schematic explanatory drawing showing the taking position of the tensile test piece.
[Fig. 3] Fig. 3 is a schematic explanatory drawing showing the taking position of the Charpy impact test piece.
[Fig. 4A] Fig. 4A is a schematic explanatory drawing showing the taking position of the SR crack resistance test piece.
[Fig. 4B] Fig. 4B is a schematic explanatory drawing showing the shape of the SR crack resistance test piece.
[Fig. 4C] Fig. 4C is a schematic explanatory drawing showing the taking method of the SR crack resistance test piece.

[Description of Embodiments]

The present inventors studied from various aspects so as to achieve a weld metal that exerted excellent temper embrittlement resistance and SR crack resistance and was also excellent in properties such as the toughness and strength even in a welding condition with comparatively large heat input. As a result, it was found out that, by increasing the nuclei formation density of carbide formed in the prior austenite grain boundary (this carbide may be hereinafter also referred to as "grain boundary carbide") at the initial stage of SR annealing, the growth rate of each grain boundary carbide during SR annealing lowered, all of the temper embrittlement resistance, SR crack resistance, strength and toughness could be provided even in a welding condition with comparatively large heat input, and the present invention was completed.

When the heat input in welding increases, a weld metal microstructure with coarsened prior austenite grain is obtained. Because coarsening of the prior austenite grain causes reduction of the area of the prior austenite grain boundary that is the precipitation site of the grain boundary carbide, under the welding condition with large heat input, the number of the grain boundary carbide particles precipitated at the initial stage of SR annealing reduces, and each grain boundary carbide particle is liable to be coarsened in the SR annealing step thereafter. Therefore, weakening of the prior austenite grain boundary in SR annealing is promoted, and the SR crack and temper embrittlement are liable to occur.

On the other hand, the present inventors found out that, even under a condition the weld heat input was large and the prior austenite grain boundary area per the weld metal unit volume was less, by increasing the nuclei formation density of the grain boundary carbide per the prior austenite grain boundary unit area, the grain boundary carbide particle number at the initial stage of SR annealing could be increased, and the temper embrittlement resistance and SR crack resistance could be improved by suppressing coarsening of the grain boundary carbide during SR annealing. More specifically, by restricting the elements such as Si, Mn, Cr and B affecting nucleation and coarsening of the grain boundary carbide, a weld metal provided with all properties could be obtained.

Among these elements, control of B is particularly important. B has an action of lowering the prior austenite grain boundary energy by segregating in the prior austenite grain boundary. By adding such B by a proper amount, the prior austenite grain boundary is stabilized, and coarsening of the grain boundary carbide during SR annealing is suppressed. On the other hand, when B is added excessively, the prior austenite grain boundary is stabilized excessively, the nuclei formation density of the grain boundary carbide per the prior austenite grain boundary unit area at the initial stage of SR annealing lowers, and coarsening of each grain boundary carbide particle particularly at the initial stage of SR annealing comes to be caused. From these reasons, the upper and lower limit of the content of B comes to be restricted more strictly.

Also, on the embrittlement in SR annealing, the hardening action by precipitation of fine Mo-based carbide and V-based carbide within the prior austenite grain also comes to exert an adverse effect. Therefore, it was revealed that control of the content of C, Mo and V contributing to precipitation of the Mo-based carbide and V-based carbide so as to satisfy a predetermined relation equation (will be described below) led to further improvement of the temper embrittlement resistance.

With respect to the weld metal of the present invention, although the chemical composition should be strictly stipulated, the reasons of setting the range thereof including the composition of C, Mo and V described above are as followings.

(C: 0.05-0.12%)

C is an element required for securing the strength of the weld metal. When C content becomes less than 0.05%, a predetermined strength cannot be secured. However, excessive C content causes coarsening of carbide and becomes a cause of deterioration of the toughness, and therefore C content is made 0.12% or less. The preferable lower limit of C content is 0.07% or more, and the preferable upper limit is 0.10% or less.

(Si: 0.10-0.35%)

Si is an element contributing to solid solution strengthening and making the grain boundary carbide unstable. Therefore, Si content was made 0.10% or more. On the other hand, when Si content becomes excessive, the nuclei formation density of the grain boundary carbide at the initial stage of SR annealing is reduced, and the temper embrittlement resistance comes to be adversely affected, and therefore Si content is made 0.35% or less. Also, the lower limit of Si content is preferably 0.15% or more, more preferably 0.17% or more, and the upper limit is preferably 0.32% or less, more preferably 0.30% or less.

(Mn: 0.65-0.90%)

Mn is an element useful in improving the strength of the weld metal and stabilizing the grain boundary carbide. When Mn content is less than 0.65%, the strength at the room temperature lowers and the grain boundary carbide nuclei formation density at the initial stage of SR annealing reduces. As a result, the SR crack resistance cannot be secured particularly. However, when Mn content becomes excessive, the temper embrittlement resistance is deteriorated by promotion of segregation of impurities to the prior austenite grain boundary and promotion of coarsening of the grain boundary carbide during SR annealing, and therefore Mn content should be 0.90% or less. Also, the lower limit of Mn content is preferably 0.70% or more, more preferably 0.75% or more, and the upper limit is preferably 0.85% or less, more preferably 0.83% or less.

(Cr: 1.85-2.50%)

Cr is an element useful in stabilizing the grain boundary carbide. When Cr content is less than 1.85%, unstable film-like coarse cementite comes to precipitate in the prior austenite grain boundary, and the SR crack resistance deteriorates. However, excessive Cr content becomes a cause of deterioration of the toughness by causing coarsening of carbide, and therefore Cr content should be 2.50% or less. Also, the lower limit of Cr content is preferably 1.95% or more, more preferably 2.0% or more, and the upper limit is preferably 2.4% or less, more preferably 2.35% or less.

(Mo: 0.80-1.20%)

Mo is an element useful in securing the strength of the weld metal. When Mo content is less than 0.80%, predetermined strength cannot be secured. However, excessive Mo content causes increase of solid-solutionized Mo after SR annealing, the temper embrittlement resistance deteriorates because fine $Mo_2C$ precipitates in step cooling, and therefore Mo content should be 1.20% or less. Also, the lower limit of Mo content is preferably 0.85% or more, more preferably 0.90% or more, and the upper limit is preferably 1.15% or less, more preferably 1.10% or less.

(V: 0.25-0.50%)

V is an element useful in forming carbide (MC carbide: M is a carbide forming element) and securing the strength of the weld metal. When V content is less than 0.25%, a predetermined strength cannot be secured. However, excessive V content causes excessive increase of the strength and deteriorates the toughness, and therefore V content should be 0.50% or less. Also, the lower limit of V content is preferably 0.27% or more, more preferably 0.30% or more, and the upper limit is preferably 0.45% or less, more preferably 0.40% or less.

(Nb: 0.010-0.050%)

Nb is an element useful in forming carbide (MC carbide) and securing the strength of the weld metal. When Nb content is less than 0.010%, a predetermined strength cannot be secured. However, excessive Nb content causes excessive increase of the strength and deteriorates the toughness, and therefore Nb content should be 0.050% or less. Also, the lower limit of Nb content is preferably 0.012% or more, more preferably 0.015% or more, and the upper limit is preferably 0.040% or less, more preferably 0.035% or less.

(B: 0.0005-0.0010%)

B is an element useful in controlling the form of the grain boundary carbide in SR annealing. When B content is less than 0.0005%, a prior austenite grain boundary stabilizing action is not secured sufficiently, the grain boundary carbide during SR annealing is coarsened, and thereby the temper embrittlement resistance deteriorates in particular. However, excessive B content excessively stabilizes the prior austenite grain boundary, and the grain boundary carbide nuclei formation density at the initial stage of SR annealing lowers. As a result, the grain boundary carbide at the initial stage of SR annealing is coarsened, and the SR crack resistance is adversely affected. Therefore, B content should be 0.0010% or less. The lower limit of B content is preferably 0.0006% or more, more preferably 0.0007% or more, and the upper limit is preferably 0.0009% or less, more preferably 0.0008% or less.

(N: 0.025% or less (exclusive of 0%))

N is an element inevitably mixed in at the time of welding, and is hardly made 0% industrially. When N content exceeds 0.025%, the toughness cannot be secured due to excessive increase of the strength, and therefore N content should be 0.025% or less. Also, the upper limit of N content is preferably 0.020% or less, more preferably 0.018% or less.

(O: 0.025-0.060%)

O is an element useful in improving the toughness by forming oxide and contributing to miniaturization of the microstructure. In order to exert such effect, O should be contained by 0.025% or more. However, when O content becomes excessive and exceeds 0.060%, coarse oxide increases and becomes an origin of the brittle fracture, and thereby the toughness deteriorates to the contrary. Also, the lower limit of O content is preferably 0.030% or more, more preferably 0.032% or more, and the upper limit is preferably 0.050% or less, more preferably 0.045% or less.

The contained elements stipulated in the present invention are as described above, and the remainder is iron and inevitable impurities. As the inevitable impurities, mixing in of elements (P, S and the like for example) brought in due to the situation of raw material, materials, manufacturing facilities and the like is permissible.

In the weld metal of the present invention, although the value $\alpha$ defined by the expression (1) below may be approximately 1,760 or less (test No. 1 described below), 1,750 or less is preferable. By satisfying such requirement of the value $\alpha$, coarsening of the grain boundary carbide in SR annealing is suppressed further, and the temper embrittlement resistance is improved further. This value $\alpha$ is more preferably 1,650 or less, still more preferably 1,400 or less.

$$\text{Value } \alpha = [Mn]/[B] \quad \cdots (1)$$

where [Mn] and [B] express the content (mass%) of Mn and B in the weld metal respectively.

Also, the value $\beta$ defined by the expression (2) below may be approximately 0.0020 or less (test No. 7 described below), however 0.00193 or less is the requirement. The value $\beta$ expresses easiness of precipitation of carbide. By satisfying such requirement of the value $\beta$, precipitation of Mo-based carbide and V-based carbide during SR annealing is suppressed, and the temper embrittlement resistance comes to be improved further. This value $\beta$ is more preferably 0.00175 or less, still more preferably 0.00165 or less.

$$\text{Value } \beta = [C] \times \{([Mo]/96) + ([V]/51)\} \quad \cdots (2)$$

where [C], [Mo] and [V] express the content (mass%) of C, Mo and V in the weld metal respectively.

In the weld metal of the present invention, other than the basic composition described above, according to the necessity, it is preferable to further contain, (a) at least one element out of Cu: 1.00% or less (exclusive of 0%) and Ni: 1.00% or less (exclusive of 0%), (b) W: 0.50% or less (exclusive of 0%), (c) Al: 0.030% or less (exclusive of 0%), (d) Ti: 0.020% or less (exclusive of 0%), and the like, and the property of the weld metal is further improved according to the kind of the elements contained. The reasons of setting the range when these elements are to be contained are as described below.

(At least one element out of Cu: 1.00% or less (exclusive of 0%) and Ni: 1.00% or less (exclusive of 0%))

Cu and Ni are elements useful in improving the toughness by miniaturizing the microstructure. However, when the content of these elements becomes excessive, the strength becomes excessive, the toughness lowers, and therefore the content of Cu or Ni is preferably made 1.00% or less respectively, more preferably 0.80% or less, still more preferably 0.50% or less respectively. Also, the lower limit for exerting the effect described above is preferably 0.05% or more, more preferably 0.1% or more for the both.

(W: 0.50% or less (exclusive of 0%))

W is a useful element in improving the strength of the weld metal. However, excessive W content coarsens carbide precipitated in the grain boundary and adversely affects the toughness, and therefore W content is preferably 0.50% or less, more preferably 0.3% or less, still more preferably 0.2% or less. Also, the lower limit for exerting the effect described above is preferably 0.08% or more, more preferably 0.1% or more.

(Al: 0.030% or less (exclusive of 0%))

Al is an element useful as a deoxidizing agent. However, excessive Al content causes coarsening of oxide and adversely affects the toughness, and therefore Al content is preferably 0.030% or less, more preferably 0.020% or less, still more preferably 0.015% or less. Also, the lower limit for exerting the effect described above is preferably 0.001% or more, more preferably 0.0012% or more.

(Ti: 0.020% or less (exclusive of 0%))

Ti is an element useful in improving the toughness of the weld metal. However, excessive Ti content extreme enhances intra-grain strengthening by promotion of precipitation strengthening of the MC carbide and deteriorates the SR crack resistance, and therefore Ti content is preferably 0.020% or less, more preferably 0.015% or less, still more preferably 0.012% or less. Also, the lower limit for exerting the effect described above is preferably 0.005% or more, more preferably 0.008% or more.

Although the welding method for obtaining the weld metal of the present invention is not particularly limited as far as it is an arc welding method, it is preferable to apply shielded metal arc welding (SMAW) which is frequently used in actual welding work of a chemical reactor vessel and the like.

However, in order to achieve the weld metal of the present invention, it is required to properly control the welding condition and the welding material. The welding material composition is naturally restricted by the required weld metal composition, and it is required to properly control the welding condition and the welding material composition in order to secure a predetermined carbide form.

For example, preferable welding condition in SMAW is 3.5 kJ/mm or less of the weld heat input, and 250°C or below of the preheating and interpass temperatures in welding.

When the heat input in SMAW exceeds 3.5 kJ/mm or the preheating and interpass temperatures exceeds 250°C, the cooling rate in cooling reduces, and the prior austenite grain comes to be coarsened. However, from the viewpoint of the cold crack in welding, it is preferable to control the heat input to 2.2 kJ/mm or more and the preheating and interpass temperatures to 190°C or above.

By forming the weld metal according to the conditions described above, a weld metal that exerts excellent temper embrittlement resistance and SR crack resistance and is excellent in properties such as the toughness and strength can be obtained, and a welded structure including such weld metal can be achieved.

[Examples]

Although the present invention will be described below in more detail by examples, the examples described below do not have the nature of limiting the present invention, the present invention can be also implemented being appropriately modified within the range adaptable to the purposes described above and below, and any of them is to be included within the technical range of the present invention.

The weld metal was manufactured with each welding condition described below using the base metal having the composition described below and was subjected to heat treatment, and various properties were evaluated thereafter.

(Base metal composition (mass%))

C: 0.13%, Si: 0.25%, Mn: 0.59%, P: 0.006%, S: 0.003%, Cr: 2.36%, Mo: 1.00%, V: 0.30%, Nb: 0.022%, B: 0.001% (remainder: iron and inevitable impurities)

(Welding condition)

Welding method: shielded metal arc welding (SMAW)
Base metal plate thickness: 20 mm
Groove angle: 20° (V shape)
Root gap: 19 mm
Welding position: flat, 45° vertical
Core wire diameter: 5.0 mm (composition of coating flux is shown in Tables 1, 2 below)
Heat input condition

(A) 2.2 kJ/mm (150 A-22 V, 9 cm/min)
(B) 2.5 kJ/mm (150 A-22 V, 8 cm/min)
(C) 2.9 kJ/mm (170 A-23 V, 8 cm/min)
(D) 3.3 kJ/mm (190 A-26 V, 9 cm/min)

Preheating and interpass temperatures: 190-250°C
Build-up method: 1 layer, 2 passes

(Composition of core wire used)

Composition a (mass%) C: 0.07%, Si: 0.13%, Mn: 0.50%, Cu: 0.03%, Ni: 0.02%, Cr: 2.26%, Mo: 1.03%, V: 0.002%, Nb: 0.002% (remainder: iron and inevitable impurities)
Composition b (mass%) C: 0.08%, Si: 0.13%, Mn: 0.48%, Cu: 0.03%, Ni: 0.02%, Cr: 2.29%, Mo: 1.15%, V: 0.002%, Nb: 0.002% (remainder: iron and inevitable impurities)

Composition c (mass%) C: 0.05%, Si: 0.20%, Mn: 0.45%, Cu: 0.04%, Ni: 0.02%, Cr: 1.39%, Mo: 0.55%, V: 0.002%, Nb: 0.002% (remainder: iron and inevitable impurities)

Composition d (mass%) C: 0.09%, Si: 0.15%, Mn: 0.49%, Cu: 0.04%, Ni: 0.03%, Cr: 2.31%, Mo: 1.10%, V: 0.002%, Nb: 0.002% (remainder: iron and inevitable impurities)

Composition e (mass%) C: 0.08%, Si: 0.18%, Mn: 0.50%, Cu: 0.03%, Ni: 0.03%, Cr: 2.28%, Mo: 1.22%, V: 0.002%, Nb: 0.002% (remainder: iron and inevitable impurities)

Composition f (mass%) C: 0.08%, Si: 0.16%, Mn: 0.49%, Cu: 0.04%, Ni: 0.03%, Cr: 2.32%, Mo: 1.06%, V: 0.285%, Nb: 0.029% (remainder: iron and inevitable impurities)

[Heat treatment]

(SR annealing treatment)

As the SR annealing treatment, the weld metal obtained was subjected to heat treatment at 705°C for 8 hours, or at 705°C for 32 hours. In the SR annealing treatment, the test sample was heated, the heating condition was adjusted so that the temperature raising rate became 55°C per hour (55°C/h) or less when the temperature of the test sample exceeded 300°C, and the test sample was heated until the temperature of the test sample reached 705°C. Further, after the test sample was held at 705°C for 8 hours or 32 hours, the test sample was cooled until the temperature of the test sample became 300°C or below so that the cooling rate became 55°C/h or less. Also, in this SR annealing treatment, the temperature raising rate and the cooling rate are not stipulated in the temperature range where the temperature of the test sample is 300°C or below.

(Step cooling)

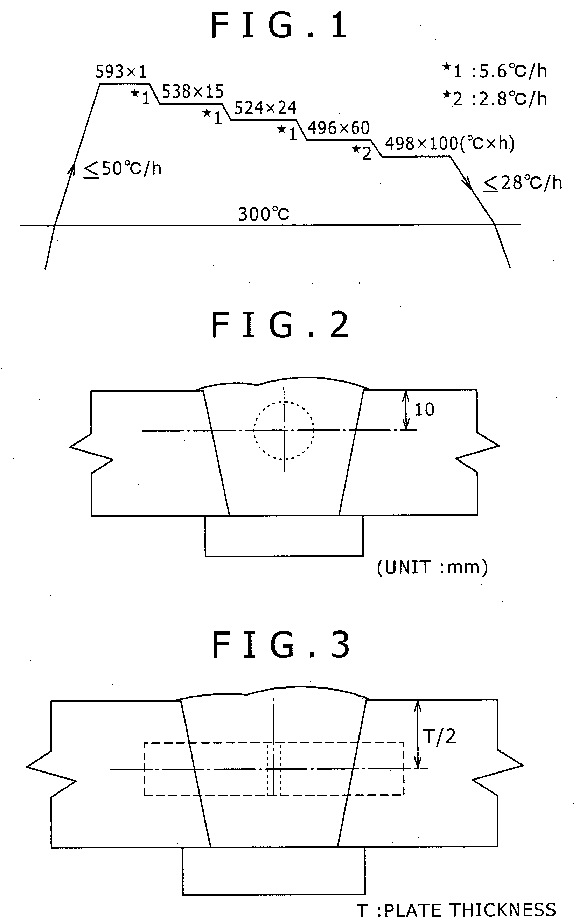

In evaluating the toughness and the temper embrittlement resistance, the test sample having been subjected to the SR annealing treatment at 705°C for 8 hours was subjected to step cooling as the embrittlement promotion treatment. Fig. 1 is a graph showing the step cooling treatment condition with the temperature being plotted on the vertical axis and with the time being plotted on the horizontal axis. As shown in Fig. 1, in the step cooling, the test sample is heated, the heating condition is adjusted so that the temperature raising rate becomes 50°C per hour (50°C/h) or less when the temperature of the test sample exceeds 300°C, and the test sample is heated until the temperature of the test sample reaches 593°C and is held at the temperature for 1 hour. Thereafter, in a similar manner, the test sample is held at 538°C for 15 hours, at 524°C for 24 hours, and at 496°C for 60 hours, and the cooling rate in the cooling stages between these holding periods is adjusted so that the test piece is cooled at 5.6°C per hour. Further, the test piece having been held at 496°C is cooled to 468°C at 2.8°C per hour (2.8°C/h), and is held at this temperature for 100 hours. Furthermore, the test sample is cooled until the temperature of the test sample becomes 300°C or below so that the temperature drop becomes 28°C per hour (28°C/h) or less. Also, in this step cooling treatment, similarly to the SR annealing treatment, the temperature raising rate and the cooling rate are not stipulated in the temperature range where the temperature of the test sample is 300°C or below.

(Strength)

From the position of 10 mm depth from the plate thickness surface of the weld metal having been subjected to the SR annealing treatment of 705°C×32 hours, a tensile test piece (JIS Z 3111 No. A2) was taken in the welding line direction based on Fig. 2, and the tensile strength TS was measured at the room temperature (approximately 25°C) according to the procedure of JIS Z 2241. The case the tensile strength TS>600 MPa was evaluated to be excellent in strength.

(Toughness)

From the plate thickness center part of the weld metal having been subjected to the SR annealing treatment of 705°C×8 hours, a Charpy impact test piece (JIS Z 3111 No. 4 V-notch test piece) was taken perpendicularly to the welding line direction based on Fig. 3, the Charpy impact test was performed according to the procedure of JIS Z 2242, and the temperature $vTr_{54}$ at which the average value of the absorbed energy of 3 times became 54 J was measured. The case $vTr_{54}$ was -50°C or below was evaluated to be excellent in the toughness. Also, with respect to the weld metal having been subjected to step cooling after the SR annealing treatment of 705°C×8 hours, the temperature $vTr'_{54}$ at which the average value of the absorbed energy became 54 J was measured in a similar manner. The case $vTr'_{54}$ was -50°C or below was evaluated to be excellent in the toughness.

(Temper embrittlement resistance)

The case the difference $\Delta vTr_{54}$ of $vTr_{54}$ and $vTr'_{54}$ measured above was 5°C or less [$\Delta vTr_{54}=vTr'_{54}-vTr_{54})\leqq5°C$] was evaluated to be excellent in the temper embrittlement resistance. Also, one in which $\Delta vTr_{54}$ becomes "0°C" is an excellent weld metal in which the temper embrittlement hardly occurs.

(SR crack resistance)

From the last pass (as-welded zone) of the weld metal, ring cracking test pieces with the slit size=0.5 mm were taken as described below. The SR annealing treatment of 625°C×10 hours was performed, the case the crack was not generated in the vicinity of the bottom part of the notch for all 6 pieces of the test piece (3 observation surfaces×2 test numbers) was evaluated to be excellent in the SR crack resistance (evaluation ○), and the case the crack was generated was evaluated to be inferior in the SR crack resistance (evaluation ×).

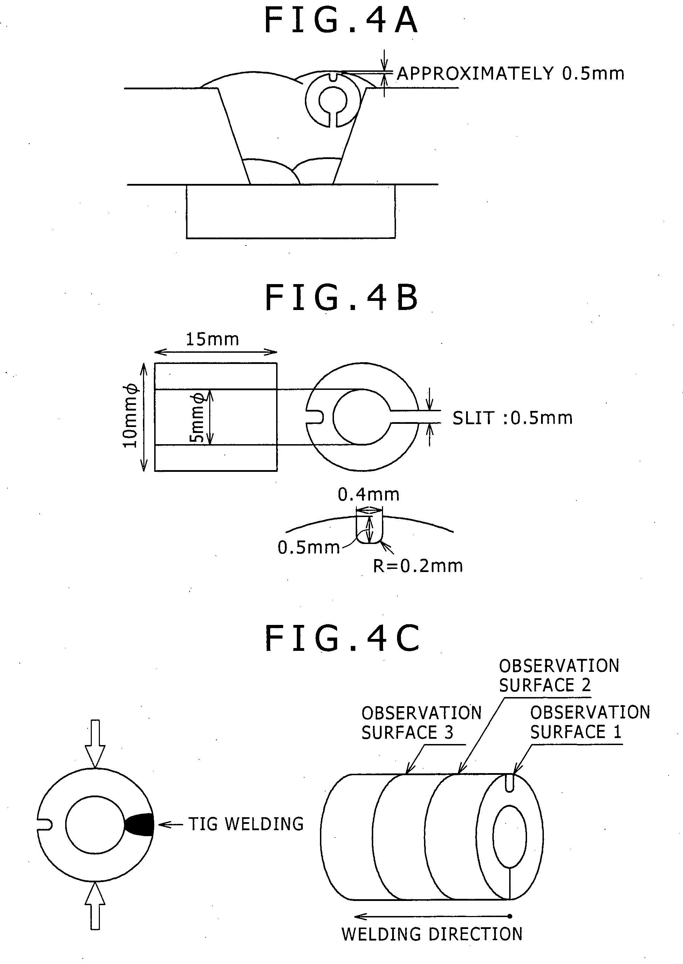

As the evaluation method of the SR crack resistance then, the summary of the ring cracking test will be shown below. The taking position of the test piece is shown in Fig. 4A, and the shape of the test piece is shown in Fig. 4B. The test piece is taken from right below the surface of the last bead so that the microstructure right below the U notch becomes the as-welded zone, and the slit size (width) is made 0.5 mm. The test piece is pressingly shrunken until the slit width becomes 0.05 mm, the slit part is TIG-welded, and a tensile residual stress is applied to the bottom part of the notch. The test piece after TIG welding was subjected to the SR annealing treatment of 625°C×10 hours in a muffle furnace, the test piece was taken (observation surfaces 1-3) by being equally divided into three (observation surfaces 1-3) as shown in Fig. 4C after the SR annealing treatment, the surface thereof (the vicinity of the bottom part of the notch) was observed by an optical microscope, and the SR crack generation status was observed.

The chemical composition of various coating flux used in forming the weld metal is shown in Tables 1, 2 below (coating flux Nos. B1-48). Also, the chemical composition of the weld metal formed is shown in Tables 3, 4 below along with the welding condition (coating flux No., heat input condition, core wire kind, welding position, preheating and interpass temperatures) (test Nos. 1-48). Further, the property evaluation result [tensile strength TS, toughness ($vTr_{54}$, $vTr'_{54}$), temper embrittlement resistance ($\Delta vTr_{54}$), SR crack resistance] of each weld metal is shown in Tables 5, 6 below (Test Nos. 1-48).

[Table 1]

| Coating flux No. | Chemical composition of coating flux (mass%) | | | | | | | | | | | | | | | | | |
|---|---|---|---|---|---|---|---|---|---|---|---|---|---|---|---|---|---|---|
| | CaO | $CO_2$ | $CaF_2$ | C | Si | $SiO_2$ | Mn | Cr | Mo | V | Nb | B | Cu | Ni | W | Al | Ti | Others* |
| B1 | 23 | 22 | 21 | 0.155 | 3.7 | 2.9 | 2.6 | 0.4 | 1.40 | 1.40 | 0.195 | 0.03 | - | - | - | 0.1 | 0.004 | 22 |
| B2 | 23 | 22 | 21 | 0.155 | 3.7 | 2.9 | 2.2 | 0.4 | 0.10 | 1.40 | 0.195 | 0.03 | - | - | - | 0.1 | 0.004 | 22 |
| B3 | 23 | 22 | 21 | 0.085 | 3.4 | 2.9 | 2.5 | 0.2 | - | 1.13 | 0.108 | 0.04 | - | - | - | 0.1 | 0.004 | 23 |
| B4 | 23 | | 21 | 0.085 | 3.7 | 2.8 | 2.2 | 0.4 | 0.05 | 1.28 | 0.195 | 0.03 | - | - | - | 0.1 | 0.004 | 23 |
| B5 | 23 | 22 | 21 | 0.155 | 3.8 | 2.9 | 2.5 | 0.3 | 0.10 | 1.40 | 0.108 | 0.05 | - | - | - | 0.1 | 0.004 | 22 |
| B6 | 23 | 22 | 21 | 0.155 | 3.7 | 2.9 | 2.4 | 0.5 | - | 1.40 | 0.122 | 0.05 | - | - | - | 0.1 | 0.004 | 22 |
| B7 | 23 | 22 | 21 | 0,155 | 3.7 | 2.9 | 2.2 | 0.5 | 0.10 | 1.45 | 0.252 | 0.04 | - | - | 0.8 | 0.1 | 0.004 | 21 |
| B8 | 23 | 22 | 21 | 0.135 | 3.1 | 2.9 | 2.4 | 0.7 | 0.10 | 1.12 | 0.146 | 0.03 | - | - | - | 0.1 | 0.004 | 23 |
| B9 | 23 | 22 | 21 | 0.085 | 3.7 | 2.8 | 2.3 | 0.4 | - | 1.27 | 0.122 | 0.04 | - | - | - | 0.1 | ' 0.004 | 23 |
| B10 | 23 | 22 | 21 | 0.085 | 3.5 | 2.6 | 2.4 | 0.1 | - | 1.27 | 0.122 | 0.05 | - | - | - | 0.1 | 0.004 | 23 |
| B11 | 23 | 22 | 21 | 0.080 | 3.7 | 2.9 | 2.4 | 0.5 | - | 1.27 | 0.122 | 0.05 | - | - | - | 0.1 | 0.080 | 22 |
| B12 | 23 | 22 | 21 | 0.155 | 4.0 | 2.8 | 2.3 | 0.4 | 0.10 | 1.40 | 0.108 | 0.04 | 0.2 | - | - | 0.1 | 0.004 | 22 |
| B13 | 23 | 22 | 21 | 0.075 | 3.4 | 2.9 | 2.4 | 0.3 | - | 1.27 | 0.195 | 0.04 | - | 0.3 | - | 0.1 | 0.004 | 23 |
| B14 | 23 | 22 | 21 | 0.080 | 3.4 | 2.9 | 2.5 | 0.4 | - | 1.25 | 0.098 | 0.03 | - | - | - | 0.1 | 0.004 | 23 |
| B15 | 23 | 22 | 21 | 0.085 | 2.8 | 2.3 | 2.3 | 1.4 | - | 1.21 | 0.122 | 0.04 | - | - | - | 0.1 | 0.004 | 23 |
| B16 | 23 | 22 | 21 | 0.080 | 4.0 | 2.9 | 2.1 | 0.4 | 0.05 | 1.03 | 0.252 | 0.03 | 0.1 | 0.7 | - | 0.1 | 0.004 | 22 |
| B17 | 23 | 22 | 21 | 0.085 | 3.3 | 2.7 | 2.6 | 0.4 | - | 1.12 | 0.220 | 0.05 | - | - | - | 0.1 | 0.004 | 23 |
| B18 | 23 | 22 | 21 | 0.140 | 3.3 | 2.6 | 2.4 | 2.7 | 1.22 | 1.10 | 0.195 | 0.05 | 0.6 | 0.3 | - | 0.1 | 0.004 | 19 |
| B19 | 23 | 22 | 21 | 0.140 | 3.3 | 2.6 | 2.4 | 2.7 | 1.26 | 1.27 | 0.195 | 0.05 | 0.6 | 0.3 | 0.8 | 0.1 | 0.004 | 18 |
| B20 | 23 | 22 | 21 | 0.085 | 2.8 | 2.9 | 2.4 | 0.5 | - | 1.12 | 0.146 | 0.04 | 0.3 | 0.5 | - | 0.1 | 0.060 | 23 |
| B21 | 23 | 22 | 21 | 0.085 | 3.3 | 2.9 | 2.4 | 0.4 | - | 1.45 | 0.108 | 0.05 | - | - | - | 0.1 | 0.004 | 23 |
| B22 | 23 | 22 | 21 | 0.085 | 3.1 | 2.6 | 2.3 | 0.1 | 0.20 | 1.38 | 0.098 | 0.04 | - | - | - | 0.1 | 0.030 | 23 |
| B23 | 23 | 22 | 21 | 0.085 | 3.7 | 2.6 | 2.4 | 0.7 | - | 0.86 | 0.108 | 0.04 | - | - | - | 0.2 | 0.004 | 23 |

(continued)

| Coating flux No. | Chemical composition of coating flux (mass%) | | | | | | | | | | | | | | | | | |
|---|---|---|---|---|---|---|---|---|---|---|---|---|---|---|---|---|---|---|
| | CaO | $CO_2$ | $CaF_2$ | C | Si | $SiO_2$ | Mn | Cr | Mo | V | Nb | B | Cu | Ni | W | Al | Ti | Others* |
| B24 | 23 | 22 | 21 | 0.085 | 4.0 | 2.8 | 2.2 | 0.2 | - | 1.27 | 0.288 | 0.04 | - | - | - | 0.3 | 0.004 | 22 |
| * Others: SrO, $BaF_2$, and the like | | | | | | | | | | | | | | | | | | |

[Table 2]

| Coating flux No. | Chemical composition of coating flux (mass%) | | | | | | | | | | | | | | | | | |
|---|---|---|---|---|---|---|---|---|---|---|---|---|---|---|---|---|---|---|
| | CaO | $CO_2$ | $CaF_2$ | C | Si | $SiO_2$ | Mn | Cr | Mo | V | Nb | B | Cu | Ni | W | Al | Ti | Others* |
| B25 | 23 | 22 | 21 | 0.085 | 3.4 | 2.9 | 2.3 | 0.4 | - | 1.08 | 0.220 | 0.04 | - | - | 0.3 | 0.1 | 0.060 | 23 |
| B26 | 23 | 22 | 21 | 0.155 | 3.7 | 2.9 | 2.4 | 0.1 | - | 1.08 | 0.108 | 0.04 | - | 1.1 | - | 0.6 | 0.004 | 21 |
| B27 | 23 | 22 | 21 | 0.135 | 3.1 | 2.9 | 2.4 | 0.1 | 0.15 | 1.27 | 0.146 | 0.05 | - | - | - | 0.8 | 0.004 | 22 |
| B28 | 23 | 22 | 21 | 0.085 | 3.7 | 2.9 | 2.3 | 0.3 | - | 0.65 | 0.045 | 0.04 | 1.2 | - | - | 0.1 | 0.004 | 22 |
| B29 | 23 | 22 | 21 | 0.085 | 3.7 | 2.9 | 2.3 | 0.4 | - | 0.71 | 0.045 | 0.04 | - | - | - | 0.1 | 0.004 | 23 |
| B30 | 23 | 22 | 21 | 0.085 | 3.7 | 2.9 | 2.3 | 0.4 | - | 1.27 | 0.108 | 0.05 | - | - | - | 0.1 | 0.004 | 23 |
| B31 | 23 | 22 | 21 | 0.085 | 3.7 | 2.9 | 2.4 | 0.4 | - | 1.27 | 0.108 | 0.05 | - | - | - | 0.1 | 0.004 | 23 |
| B32 | 23 | 22 | 21 | 0.085 | 3.6 | 2.8 | 2.2 | 0.4 | - | 1.30 | 0.108 | 0.04 | - | - | - | 0.1 | 0.004 | 23 |
| B33 | 23 | 22 | 21 | 0.175 | 3.7 | 2.9 | 2.2 | 0.7 | 0.20 | 1.00 | 0.095 | 0.04 | - | - | - | 0.1 | 0.004 | 22 |
| B34 | 23 | 22 | 21 | 0.060 | 3.7 | 2.9 | 2.5 | 0.6 | - | 1.27 | 0.122 | 0.04 | - | - | - | 0.1 | 0.004 | 22 |
| B35 | 23 | 22 | 21 | 0.135 | 3.8 | 2.8 | 2.3 | 1.5 | 1.26 | 1.27 | 0.195 | 0.04 | - | - | - | 0.6 | 0.004 | 20 |
| B36 | 23 | 22 | 21 | 0.130 | 3.3 | 2.6 | 2.0 | 2.7 | 1.24 | 0.75 | 0.240 | 0.04 | - | - | - | 1.0 | 0.004 | 20 |
| B37 | 23 | 22 | 21 | 0.155 | 3.8 | 2.9 | 2.4 | 0.2 | 0.25 | 1.12 | 0.146 | 0.03 | - | - | - | 0.1 | 0.110 | 22 |
| B38 | 23 | 22 | 21 | 0.085 | 2.6 | 2.3 | 2.2 | 1.5 | - | 1.45 | 0.122 | 0.04 | - | - | - | 0.1 | 0.004 | 23 |
| B39 | 23 | 22 | 21 | 0.135 | 3.4 | 2.7 | 2.7 | 0.7 | 0.83 | 1.10 | 0.122 | 0.05 | 0.2 | - | - | 0.1 | 0.004 | 19 |
| B40 | 23 | 22 | 21 | 0.085 | 3.7 | 2.9 | 2.4 | 0.5 | - | 1.73 | 0.122 | 0.06 | 0.1 | 0.2 | - | 0.1 | 0.004 | 22 |
| B41 | 23 | 22 | 21 | 0.080 | 3.7 | 2.9 | 2.4 | 0.2 | - | 1.12 | 0.087 | 0.04 | - | - | - | 0.1 | 0.004 | 23 |
| B42 | 23 | 22 | 21 | 0.085 | 3.7 | 2.9 | 2.3 | 0.7 | - | 1.00 | 0.344 | 0.03 | 0.2 | - | - | 0.1 | 0.004 | 22 |
| B43 | 23 | 22 | 21 | 0.155 | 3.7 | 2.9 | 2.2 | 0.5 | - | 1.40 | 0.122 | 0.03 | - | - | - | 0.1 | 0.004 | 22 |
| B44 | 23 | 22 | 21 | 0.085 | 3.6 | 2.9 | 2.4 | 0.3 | - | 1.27 | 0.108 | 0.04 | - | - | - | 0.1 | 0.004 | 23 |
| B45 | 23 | 22 | 21 | 0.080 | 3.7 | 2.6 | 2.5 | 0.1 | - | 1.27 | 0.122 | 0.04 | 1.3 | 1.3 | - | 0.1 | 0.004 | 22 |
| B46 | 23 | 22 | 21 | 0.085 | 3.4 | 2.9 | 2.2 | 0.4 | - | 1.32 | 0.195 | 0.04 | - | 1.3 | - | 0.1 | 0.004 | 22 |
| B47 | 23 | 22 | 21 | 0.135 | 3.4 | 2.7 | 2.3 | 2.7 | 1.28 | 0.80 | 0.122 | 0.04 | 0.2 | - | 1.5 | 0.1 | 0.004 | 18 |

(continued)

| Coating flux No. | Chemical composition of coating flux (mass%) | | | | | | | | | | | | | | | | | |
|---|---|---|---|---|---|---|---|---|---|---|---|---|---|---|---|---|---|---|
| | CaO | $CO_2$ | $CaF_2$ | C | Si | $SiO_2$ | Mn | Cr | Mo | V | Nb | B | Cu | Ni | W | Al | Ti | Others* |
| B48 | 23 | 22 | 21 | 0.085 | 3.7 | 2.9 | 2.4 | 0.5 | - | 1.27 | 0.122 | 0.06 | - | - | - | 0.1 | 0.004 | 22 |
| * Others: SrO, BaF2, and the like | | | | | | | | | | | | | | | | | | |

[Table 3]

| Test No. | Coating flux No. | Heat input condition | Core wire kind | Welding position | Preheating and interpass temperature (°C) | Chemical composition of weld metal ** (mass%) | | | | | | | | | | | | | | | | α | β |
|---|---|---|---|---|---|---|---|---|---|---|---|---|---|---|---|---|---|---|---|---|---|---|---|
| | | | | | | C | Si | Mn | Cr | Mo | V | Nb | B | N | O | Cu | Ni | W | Al | Ti | | |
| 1 | B1 | (D) | a | Flat | 210 | 0.10 | 0.29 | 0.88 | 2.18 | 1.08 | 0.43 | 0.022 | 0.0005 | 0.014 | 0.036 | - | - | - | - | - | 1780 | 0.0197 |
| 2 | B2 | (D) | a | 45° vertical | 210 | 0.10 | 0.28 | 0.71 | 2.19 | 1.08 | 0.42 | 0.024 | 0.0005 | 0.014 | 0.037 | - | - | - | - | - | 1420 | 0.0195 |
| 3 | B3 | (D) | a | Flat | 200 | 0.09 | 0.24 | 0.84 | 2.12 | 1.00 | 0.34 | 0.019 | 0.0006 | 0.014 | 0.038 | - | - | - | - | - | 1400 | 0.0154 |
| 4 | B4 | (D) | a | Flat | 210 | 0.08 | 0.27 | 0.71 | 2.21 | 1.03 | 0.38 | 0.023 | 0.0006 | 0.015 | 0.036 | - | - | - | - | - | 1183 | 0.00145 |
| 5 | B5 | (D) | a | Flat | 200 | 0.10 | 0.30 | 0.85 | 2.08 | 1.08 | 0.43 | 0.020 | 0.0010 | 0.014 | 0.039 | 0.02 | - | - | - | - | 950 | 0.0197 |
| 6 | B6 | (D) | b | 45° vertical | 200 | 0.10 | 0.25 | 0.78 | 2.25 | 1.07 | 0.42 | 0.020 | 0.0009 | 0.015 | 0.036 | 0.03 | 0.02 | - | - | - | 867 | 0.0194 |
| 7 | B7 | (D) | a | 45° vertical | 210 | 0.10 | 0.31 | 0.72 | 2.12 | 1.09 | 0.44 | 0.037 | 0.0008 | 0.013 | 0.035 | 0.09 | 0.46 | 0.28 | - | - | 900 | 0.0200 |
| 8 | B8 | (D) | a | Flat | 230 | 0.09 | 0.19 | 0.81 | 2.25 | 1.05 | 0.34 | 0.025 | 0.0006 | 0.010 | 0.043 | - | 0.04 | - | - | - | 1350 | 0.0158 |
| 9 | B9 | (D) | a | Flat | 200 | 0.07 | 0.30 | 0.75 | 2.20 | 1.02 | 0.35 | 0.021 | 0.0007 | 0.013 | 0.038 | 0.04 | - | - | - | - | 1071 | 0.0122 |
| 10 | B10 | (D) | b | 45° vertical | 230 | 0.09 | 0.27 | 0.79 | 1.89 | 1.07 | 0.39 | 0.020 | 0.0010 | 0.014 | 0.031 | 0.03 | 0.03 | - | - | - | 790 | 0.0167 |
| 11 | B11 | (D) | a | Flat | 200 | 0.07 | 0.25 | 0.76 | 2.25 | 1.04 | 0.37 | 0.020 | 0.0009 | 0.015 | 0.036 | 0.03 | - | - | - | 0.011 | 867 | 0.0127 |
| 12 | B12 | (D) | a | 45° vertical | 190 | 0.09 | 0.30 | 0.74 | 2.10 | 1.08 | 0.41 | 0.018 | 0.0007 | 0.015 | 0.026 | 0.15 | 0.03 | - | - | - | 1057 | 0.0174 |
| 13 | B13 | (D) | b | Flat | 200 | 0.06 | 0.28 | 0.81 | 2.09 | 1.05 | 0.39 | 0.026 | 0.0006 | 0.014 | 0.029 | 0.02 | 0.19 | - | - | - | 1350 | 0.00112 |
| 14 | B14 | (D) | b | 45° vertical | 200 | 0.08 | 0.26 | 0.84 | 2.16 | 1.06 | 0.36 | 0.010 | 0.0006 | 0.015 | 0.053 | 0.06 | - | - | - | - | 1400 | 0.0145 |
| 15 | B15 | (D) | a | Flat | 200 | 0.08 | 0.11 | 0.76 | 2.44 | 1.02 | 0.35 | 0.019 | 0.0007 | 0.013 | 0.041 | 0.05 | 0.03 | - | - | - | 1086 | 0.0140 |
| 16 | B16 | (D) | a | Flat | 210 | 0.07 | 0.34 | 0.66 | 2.13 | 1.04 | 0.37 | 0.038 | 0.0005 | 0.012 | 0.035 | 0.09 | 0.53 | - | - | - | 1320 | 0.0127 |
| 17 | B17 | (D) | b | 45° vertical | 220 | 0.08 | 0.29 | 0.88 | 2.26 | 1.05 | 0.31 | 0.032 | 0.0009 | 0.012 | 0.040 | 0.03 | - | - | - | - | 978 | 0.0136 |
| 18 | B18 | (D) | c | Flat | 240 | 0.10 | 0.28 | 0.82 | 2.20 | 0.87 | 0.28 | 0.027 | 0.0010 | 0.014 | 0.030 | 0.44 | 0.18 | - | - | - | 820 | 0.0146 |
| 19 | B19 | (D) | c | Flat | 240 | 0.09 | 0.29 | 0.83 | 2.13 | 1.03 | 0.35 | 0.027 | 0.0010 | 0.014 | 0.030 | 0.44 | 0.18 | - | 0.33 | - | 830 | 0.0158 |
| 20 | B20 | (D) | a | Flat | 210 | 0.07 | 0.14 | 0.60 | 2.18 | 0.99 | 0.30 | 0.024 | 0.0006 | 0.012 | 0.031 | 0.36 | 0.32 | 0.05 | - | 0.001 | 1333 | 0.0113 |
| 21 | B21 | (D) | a | Flat | 210 | 0.08 | 0.22 | 0.81 | 2.13 | 1.03 | 0.48 | 0.019 | 0.0010 | 0.011 | 0.034 | 0.04 | 0.04 | 0.02 | - | - | 810 | 0.0161 |
| 22 | B22 | (D) | a | 45° vertical | 200 | 0.09 | 0.18 | 0.77 | 2.02 | 1.17 | 0.41 | 0.014 | 0.0009 | 0.011 | 0.037 | 0.05 | 0.02 | 0.02 | - | 0.0005 | 856 | 0.0182 |
| 23 | B23 | (D) | b | 45° vertical | 210 | 0.10 | 0.29 | 0.79 | 2.40 | 1.02 | 0.26 | 0.019 | 0.0007 | 0.012 | 0.035 | 0.05 | 0.03 | 0.03 | 0.004 | - | 1129 | 0.0157 |
| 24 | B24 | (D) | a | Flat | 200 | 0.08 | 0.32 | 0.70 | 2.13 | 1.02 | 0.37 | 0.044 | 0.0006 | 0.012 | 0.034 | 0.04 | - | - | 0.008 | - | 1167 | 0.0143 |

** Remainder: iron and inevitable impurities

14

[Table 4]

| Test No. | Coating flux No. | Heat input condition | Core wire kind | Welding position | Preheating and interpass temperature (°C) | Chemical composition of weld metal ** (mass%) | | | | | | | | | | | | | | | α | β |
|---|---|---|---|---|---|---|---|---|---|---|---|---|---|---|---|---|---|---|---|---|---|---|
| | | | | | | C | Si | Mn | Cr | Mo | V | Nb | B | N | O | Cu | Ni | W | Al | Ti | | |
| 25 | B25 | (D) | a | 45° vertical | 220 | 0.07 | 0.26 | 0.75 | 2.21 | 0.98 | 0.31 | 0.038 | 0.0007 | 0.024 | 0.040 | 0.04 | 0.02 | 0.14 | - | 0.014 | 1071 | 0.00114 |
| 26 | B26 | (D) | a | 45° vertical | 210 | 0.11 | 0.29 | 0.83 | 2.08 | 1.01 | 0.32 | 0.019 | 0.0008 | 0.016 | 0.032 | - | 0.88 | - | 0.014 | - | 1038 | 0.00185 |
| 27 | B27 | (D) | a | Flat | 200 | 0.10 | 0.22 | 0.81 | 1.98 | 1.13 | 0.36 | 0.020 | 0.0009 | 0.018 | 0.048 | 0.02 | - | - | 0.028 | - | 900 | 0.00188 |
| 28 | B28 | (D) | f | Flat | 200 | 0.08 | 0.28 | 0.78 | 2.05 | 1.02 | 0.35 | 0.017 | 0.0007 | 0.014 | 0.034 | 0.93 | - | - | - | - | 1114 | 0.00140 |
| 29 | B29 | (D) | f | Flat | 200 | 0.09 | 0.30 | 0.77 | 2.29 | 1.00 | 0.38 | 0.016 | 0.0008 | 0.018 | 0.035 | 0.05 | - | - | - | - | 963 | 0.00161 |
| 30 | B30 | (A) | d | Flat | 200 | 0.08 | 0.31 | 0.75 | 2.28 | 1.02 | 0.39 | 0.017 | 0.0009 | 0.019 | 0.037 | 0.04 | 0.02 | - | - | - | 833 | 0.00146 |
| 31 | B31 | (B) | d | 45° vertical | 200 | 0.09 | 0.31 | 0.82 | 2.24 | 1.03 | 0.38 | 0.016 | 0.0010 | 0.012 | 0.033 | 0.03 | 0.03 | - | - | - | 820 | 0.00164 |
| 32 | B32 | (C) | e | Flat | 210 | 0.08 | 0.27 | 0.71 | 2.27 | 1.11 | 0.41 | 0.019 | 0.0008 | 0.014 | 0.036 | 0.05 | - | - | - | - | 888 | 0.00157 |
| 33 | B33 | (D) | e | Flat | 210 | 0.13 | 0.29 | 0.72 | 2.31 | 1.14 | 0.31 | 0.012 | 0.0008 | 0.014 | 0.034 | 0.05 | 0.05 | - | - | - | 900 | 0.00233 |
| 34 | B34 | (D) | e | Flat | 210 | 0.04 | 0.28 | 0.85 | 2.33 | 1.02 | 0.36 | 0.021 | 0.0007 | 0.012 | 0.061 | 0.03 | 0.06 | - | - | - | 1214 | 0.00071 |
| 35 | B35 | (D) | c | Flat | 200 | 0.09 | 0.36 | 0.75 | 1.82 | 1.05 | 0.36 | 0.026 | 0.0008 | 0.015 | 0.023 | 0.04 | 0.02 | - | 0.016 | - | 938 | 0.00162 |
| 36 | B36 | (D) | c | 45° vertical | 220 | 0.07 | 0.28 | 0.62 | 2.12 | 0.96 | 0.24 | 0.038 | 0.0006 | 0.012 | 0.028 | 0.02 | 0.04 | - | 0.032 | - | 1033 | 0.00103 |
| 37 | B37 | (D) | a | Flat | 220 | 0.10 | 0.22 | 0.81 | 2.16 | 1.22 | 0.35 | 0.022 | 0.0005 | 0.013 | 0.037 | 0.02 | 0.03 | - | - | 0.021 | 1620 | 0.00196 |
| 38 | B38 | (D) | a | Flat | 200 | 0.08 | 0.09 | 0.69 | 2.52 | 1.02 | 0.45 | 0.021 | 0.0007 | 0.016 | 0.035 | 0.05 | 0.08 | - | - | - | 986 | 0.00156 |
| 39 | B39 | (D) | c | 45° vertical | 210 | 0.09 | 0.29 | 0.92 | 2.20 | 0.78 | 0.34 | 0.022 | 0.0010 | 0.014 | 0.031 | 0.18 | - | - | - | - | 920 | 0.00133 |
| 40 | B40 | (D) | c | Flat | 230 | 0.08 | 0.28 | 0.81 | 2.20 | 1.05 | 0.51 | 0.022 | 0.0011 | 0.015 | 0.032 | 0.08 | 0.11 | - | - | - | 736 | 0.00168 |
| 41 | B41 | (D) | b | Flat | 200 | 0.08 | 0.31 | 0.80 | 2.19 | 1.07 | 0.35 | 0.009 | 0.0009 | 0.014 | 0.040 | 0.03 | 0.04 | - | - | - | 889 | 0.00144 |
| 42 | B42 | (D) | b | 45° vertical | 200 | 0.08 | 0.30 | 0.74 | 2.31 | 1.02 | 0.31 | 0.051 | 0.0006 | 0.014 | 0.033 | 0.12 | 0.04 | - | - | - | 1233 | 0.00134 |
| 43 | B43 | (D) | b | 45° vertical | 200 | 0.09 | 0.26 | 0.70 | 2.24 | 1.08 | 0.41 | 0.019 | 0.0004 | 0.015 | 0.036 | 0.03 | 0.03 | - | - | - | 1750 | 0.00174 |
| 44 | B44 | (D) | a | Flat | 210 | 0.07 | 0.29 | 0.79 | 2.15 | 1.03 | 0.33 | 0.019 | 0.0008 | 0.026 | 0.031 | 0.03 | 0.05 | - | - | - | 988 | 0.00120 |
| 45 | B45 | (D) | b | 45° vertical | 200 | 0.07 | 0.25 | 0.83 | 1.97 | 1.01 | 0.38 | 0.023 | 0.0007 | 0.012 | 0.033 | 1.04 | 0.04 | - | - | - | 1186 | 0.00130 |
| 46 | B46 | (D) | a | Flat | 200 | 0.08 | 0.28 | 0.71 | 2.18 | 1.01 | 0.41 | 0.025 | 0.0009 | 0.015 | 0.037 | 0.04 | 1.02 | - | - | - | 789 | 0.00146 |
| 47 | B47 | (D) | c | Flat | 210 | 0.10 | 0.26 | 0.75 | 2.22 | 1.03 | 0.27 | 0.022 | 0.0007 | 0.015 | 0.035 | 0.15 | 0.02 | - | 0.53 | - | 1071 | 0.00160 |
| 48 | B48 | (D) | a | Flat | 230 | 0.08 | 0.27 | 0.80 | 2.26 | 1.04 | 0.32 | 0.021 | 0.0011 | 0.015 | 0.033 | - | - | - | - | - | 727 | 0.00137 |

** Remainder: iron and inevitable impurities

[Table 5]

| Test No. | TS(MPa) | $vTr_{54}$ | $vTr'_{54}$ | $\Delta vTr_{54}$ | SR crack resistance |
|---|---|---|---|---|---|
| 1 | 645 | -56 | -51 | 5 | ○ |
| 2 | 637 | -58 | -53 | 5 | ○ |
| 3 | 635 | -58 | -56 | 2 | ○ |
| 4 | 632 | -58 | -56 | 2 | ○ |
| 5 | 658 | -54 | -50 | 4 | ○ |
| 6 | 642 | -57 | -53 | 4 | ○ |
| 7 | 662 | -54 | -50 | 4 | ○ |
| 8 | 634 | -58 | -57 | 1 | ○ |
| 9 | 628 | -59 | -58 | 1 | ○ |
| 10 | 640 | -57 | -55 | 2 | ○ |
| 11 | 678 | -52 | -50 | 2 | ○ |
| 12 | 643 | -51 | -51 | 0 | ○ |
| 13 | 615 | -52 | -52 | 0 | ○ |
| 14 | 613 | -52 | -50 | 2 | ○ |
| 15 | 612 | -51 | -50 | 1 | ○ |
| 16 | 650 | -59 | -55 | 4 | ○ |
| 17 | 627 | -58 | -54 | 4 | ○ |
| 18 | 611 | -58 | -58 | 0 | ○ |
| 19 | 675 | -52 | -51 | 1 | ○ |
| 20 | 618 | -57 | -56 | 1 | ○ |
| 21 | 685 | -50 | -50 | 0 | ○ |
| 22 | 675 | -54 | -50 | 4 | ○ |
| 23 | 610 | -58 | -55 | 3 | ○ |
| 24 | 662 | -51 | -50 | 1 | ○ |

[Table 6]

| Test No. | TS(MPa) | $vTr_{54}$ | $vTr'_{54}$ | $\Delta vTr_{54}$ | SR crack resistance |
|---|---|---|---|---|---|
| 25 | 671 | -52 | -50 | 2 | ○ |
| 26 | 679 | -52 | -50 | 2 | ○ |
| 27 | 632 | -52 | -50 | 2 | ○ |
| 28 | 634 | -51 | -50 | 1 | ○ |
| 29 | 640 | -56 | -54 | 2 | ○ |
| 30 | 648 | -57 | -54 | 3 | ○ |
| 31 | 646 | -58 | -56 | 2 | ○ |
| 32 . | 642 | -59 | -56 | 3 | ○ |
| 33 | 688 | -48 | -44 | 4 | ○ |
| 34 | 592 | -46 | -45 | 1 | ○ |
| 35 | 642 | -48 | -40 | 8 | × |

(continued)

| Test No. | TS(MPa) | $vTr_{54}$ | $vTr'_{54}$ | $\Delta vTr_{54}$ | SR crack resistance |
|---|---|---|---|---|---|
| 36 | 577 | -40 | -39 | 1 | × |
| 37 | 733 | -35 | -27 | 8 | × |
| 38 | 597 | -48 | -48 | 0 | ○ |
| 39 | 581 | -58 | -51 | 7 | ○ |
| 40 | 694 | -48 | -45 | 3 | × |
| 41 | 585 | -59 | -58 | 1 | ○ |
| 42 | 700 | -42 | -39 | 3 | to |
| 43 | 622 | -58 | -49 | 9 | ○ |
| 44 | 692 | -43 | -40 | 3 | ○ |
| 45 | 690 | -47 | -45 | 2 | ○ |
| 46 | 695 | -46 | -43 | 3 | ○ |
| 47 | 693 | -47 | -44 | 3 | ○ |
| 48 | 642 | -56 | -54 | 2 | × |

From Tables 1-6, following consideration can be made (also, No. described below expresses the test No. of Tables 3-6). Nos. 1-32 are examples satisfying the requirements stipulated in the present invention, and the weld metal that exerts excellent temper embrittlement resistance ($\Delta vTr_{54}$) and SR crack resistance and is excellent in the properties such as the toughness and strength has been obtained.

On the other hand, Nos. 33-48 are examples deviating from any of the requirements stipulated in the present invention. These examples are inferior in any of the properties. Out of them, in No. 33, C content of the weld metal is excessive, and the toughness ($vTr_{54}$, $vTr'_{54}$) is deteriorated. In No. 34, C content of the weld metal is insufficient, O content is excessive, the strength is insufficient, and the toughness ($vTr_{54}$, $vTr'_{54}$) is deteriorated.

In No. 35, Si content of the weld metal is excessive, Cr content and O content are insufficient, all of the toughness ($vTr_{54}$, $vTr'_{54}$), temper embrittlement resistance ($\Delta vTr_{54}$) and SR crack resistance are deteriorated. In No. 36, Mn content and V content of the weld metal are insufficient, Al content is excessive, the strength is insufficient, and the toughness ($vTr_{54}$, $vTr'_{54}$) and SR crack resistance are deteriorated.

In No. 37, Mo content and Ti content of the weld metal are excessive, and all of the toughness ($vTr_{54}$, $vTr'_{54}$), temper embrittlement resistance ($\Delta vTr_{54}$) and SR crack resistance are deteriorated. In No. 38, Si content of the weld metal is insufficient, Cr content is excessive, the strength is insufficient, and the toughness ($vTr_{54}$, $vTr'_{54}$) is deteriorated.

In No. 39, Mn content of the weld metal is excessive, Mo content is insufficient, the strength is insufficient, and the temper embrittlement resistance ($\Delta vTr_{54}$) is deteriorated. In No. 40, V content and B content of the weld metal are excessive, and the toughness ($vTr_{54}$, $vTr'_{54}$) and SR crack resistance are deteriorated.

In No. 41, Nb content of the weld metal is insufficient, and the strength is insufficient. In No. 42, Nb content of the weld metal is excessive, and the toughness ($vTr_{54}$, $vTr'_{54}$) is deteriorated. In No. 43, B content of the weld metal is insufficient, and the toughness ($vTr_{54}$, $vTr'_{54}$) and temper embrittlement resistance ($\Delta vTr_{54}$) are deteriorated.

In No. 44, N content of the weld metal is excessive, and the toughness ($vTr_{54}$, $vTr'_{54}$) is deteriorated. In No. 45, Cu content of the weld metal is excessive, and the toughness ($vTr_{54}$, $vTr'_{54}$) is deteriorated. In No. 46, Ni content of the weld metal is excessive, and the toughness ($vTr_{54}$, $vTr'_{54}$) is deteriorated.

In No. 47, W content of the weld metal is excessive, and the toughness ($vTr_{54}$, $vTr'_{54}$) is deteriorated. In No. 48, B content of the weld metal is excessive, and the SR crack resistance is deteriorated.

[Industrial Applicability]

The weld metal of the present invention is suitable to welding of a high strength steel such as a CR-Mo Steel, and is excellent in the temper embrittlement resistance and SR crack resistance.

**Claims**

1. A weld metal, consisting of:

   C: 0.05-0.12% (means mass%, the same applies to the following);
   Si: 0.10-0.35%;
   Mn: 0.65-0.90%;
   Cr: 1.85-2.50%;
   Mo: 0.80-1.20%;
   V: 0.25-0.50%;
   Nb: 0.010-0.050%;
   B: 0.0005-0.0010%;
   N: 0.025% or less (exclusive of 0%); and
   O: 0.025-0.060%, respectively,

   optionally, at least one group out of groups (a)-(d) below as other elements:

   (a) at least one element out of Cu: 1.00% or less (exclusive of 0%) and Ni: 1.00% or less (exclusive of 0%);
   (b) W: 0.50% or less (exclusive of 0%);
   (c) Al: 0.030% or less (exclusive of 0%); and
   (d) Ti: 0.020% or less (exclusive of 0%),

   with the remainder consisting of iron and inevitable impurities,
   wherein a value $\beta$ defined by the expression (2) below is 0.00193 or less:

$$\text{Value } \beta = [C] \times \{([Mo]/96) + ([V]/51)\} \quad \cdots (2)$$

   where [C], [Mo] and [V] express the content (mass%) of C, Mo and V in the weld metal, respectively.

2. The weld metal according to Claim 1, wherein a value $\alpha$ defined by the expression (1) below is 1,750 or less:

$$\text{Value } \alpha = [Mn]/[B] \quad \cdots (1)$$

   where [Mn] and [B] express the content (mass%) of Mn and B in the weld metal, respectively.

3. A welded structure comprising the weld metal according to Claim 1.

**Patentansprüche**

1. Schweißmetall, bestehend aus:

   C:      0,05-0,12 % (bedeutet Masse-%, das Gleiche gilt für das Nachstehende);
   Si:     0,10-0,35 %;
   Mn:     0,65-0,90 %;
   Cr:     1,85-2,50 %;
   Mo:     0,80-1,20 %;
   V:      0,25-0,50 %;
   Nb:     0,010-0,050 %;
   B:      0,0005-0,0010 %;
   N:      0,025 % oder weniger (ausgenommen 0 %); bzw.
   O:      0,025-0,060 %,

   gegebenenfalls mindestens einer Gruppe aus den nachstehenden Gruppen (a)-(d) als weitere Elemente:

(a) mindestens ein Element von Cu: 1,00 % oder weniger (ausgenommen 0 %) und Ni: 1,00 % oder weniger (ausgenommen 0 %);
(b) W: 0,50 % oder weniger (ausgenommen 0 %);
(c) Al: 0,030 % oder weniger (ausgenommen 0 %); und
(d) Ti: 0,020 % oder weniger (ausgenommen 0 %),

wobei der Rest aus Eisen und unvermeidbaren Verunreinigungen besteht,
wobei ein durch den nachstehenden Ausdruck (2) definierter Wert β 0,00193 oder weniger ist:

$$\text{Wert ß} = [C] \times \{([Mo]/96) + ([V]/51)\} \quad \cdots (2)$$

worin [C], [Mo] und [V] den Gehalt (Masse-%) von C, Mo bzw. V in dem Schweißmetall ausdrücken.

2. Schweißmetall nach Anspruch 1, wobei ein durch den nachstehenden Ausdruck (1) definierter Wert α 1 750 oder weniger ist:

$$\text{Wert } \alpha = [Mn]/[B] \quad \cdots (1)$$

worin [Mn] und [B] den Gehalt (Masse-%) von Mn bzw. B in dem Schweißmetall ausdrücken.

3. Schweißstruktur, umfassend das Schweißmetall nach Anspruch 1.

## Revendications

1. Métal soudé constitué de :

C : 0,05 à 0,12 % (% massique moyen, la même chose s'applique à ce qui suit) ;
Si: 0,10 à 0,35 %;
Mn : 0,65 à 0,90 % ;
Cr : 1,85 à 2,50 % ;
Mo : 0,80 à 1,20 % ;
V : 0,25 à 0,50 % ;
Nb: 0,010 à 0,050 %;
B: 0,0005 à 0,0010 % ;
N : 0,025 ou moins (à l'exclusion de 0 %) ; et
O : 0,025 à 0,060 %, respectivement,

en option, au moins un groupe parmi les groupes (a) à (d) ci-dessous comme autres éléments :

(a) au moins un élément parmi Cu: 1,00 % ou moins (à l'exclusion de 0 %) et Ni: 1,00 % ou moins (à l'exclusion de 0 %) ;
(b) W : 0,50 % ou moins (à l'exclusion de 0 %) ;
(c) Al: 0,030 % ou moins (à l'exclusion de 0 %) ; et
(d) Ti: 0,020 % ou moins (à l'exclusion de 0 %),

avec le reste constitué de fer et d'impuretés inévitables,
dans lequel une valeur β définie par l'expression (2) ci-dessous est 0,00193 ou moins :

$$\text{Valeur } \beta = [C] \times \{([Mo]/96) + ([V]/51)\} \quad (2)$$

où [C], [Mo] et [V] expriment la teneur (% massique) de C, Mo et V dans le métal soudé, respectivement.

2. Métal soudé selon la revendication 1, dans lequel une valeur α définie par l'expression (1) ci-dessous est 1,750 ou

moins :

$$\text{Valeur } \alpha = [Mn]/[B] \quad (1)$$

où [Mn] et [B] expriment la teneur (% massique) de Mn et B dans le métal soudé, respectivement.

3.  Structure soudée comprenant le métal soudé selon la revendication 1.

# FIG.1

593×1

*1  538×15

*1  524×24

*1  496×60

*2  498×100(℃×h)

≤50℃/h

≤28℃/h

300℃

*1 :5.6℃/h
*2 :2.8℃/h

# FIG.2

10

(UNIT :mm)

# FIG.3

T/2

T :PLATE THICKNESS

# FIG.4A

APPROXIMATELY 0.5mm

# FIG.4B

15mm

10mmφ

5mmφ

SLIT :0.5mm

0.4mm

0.5mm

R=0.2mm

# FIG.4C

OBSERVATION
SURFACE 2

OBSERVATION
SURFACE 3

OBSERVATION
SURFACE 1

← TIG WELDING

WELDING DIRECTION

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1693143 A1
- JP HEISEI2182378 B
- JP HEISEI8150478 B
- JP HEISEI8039287 B
- JP HEISEI10137975 B
- JP 2002263883 A
- JP 2008229718 A
- JP 2012187619 A